# NOUVEAU FASCICULE DE BREVET EUROPEEN

(11) **EP 3 223 597 B2**
(45) Date de publication et mention de la décision concernant l'opposition: **26.10.2022**
(45) Mention de la délivrance du brevet: 09.01.2019
(21) Numéro de dépôt: 15804167.3
(22) Date de dépôt: 03.11.2015
(51) Int. Cl.: A01G 3/037, B26B 15/00

(54) **OUTIL ÉLECTROPORTATIF, ET EN PARTICULIER SÉCATEUR ÉLECTRIQUE À DISSIPATEUR THERMIQUE**
HANDWERKZEUGMASCHINE, INSBESONDERE ELEKTRISCHE BAUMSCHERE MIT KÜHLKÖRPER
HAND-HELD POWER TOOL, AND IN PARTICULAR ELECTRIC PRUNING SHEARS WITH HEAT SINK

(30) Priorité: 25.11.2014 FR 1461405
(43) Date de publication de la demande: 04.10.2017
(73) Titulaire: PELLENC, 84120 Pertuis (FR)
(72) Inventeur: PELLENC, Roger, 84120 Pertuis (FR)
(74) Mandataire: Cabinet Nuss
(86) Numéro de dépôt international: PCT/FR2015/052964
(87) Numéro de publication internationale: WO 2016/083695

(56) Documents cités:
- EP-A1- 1 688 032
- EP-A1- 2 036 681
- EP-A1- 2 659 764
- WO-A2-2013/093619
- AT-A4- 504 324
- CN-U- 203 537 937
- US-A1- 2011 001 368
- US-A1- 2011 006 621
- DOUGLAS C. GIANCOLI: "Physics for Scientists & Engineers", Pearson International Edition, 2000, pages 449-450, ISBN: 0-13-017975-E

## Description

### Domaine technique

La présente invention concerne un outil électroportatif et en particulier un sécateur à moteur électrique utilisable pour des travaux de taille et de récolte, et notamment pour la taille de vignes et d'arbres fruitiers. Elle concerne notamment un sécateur pourvu d'une source d'alimentation électrique distante, par exemple, une source d'alimentation à batteries pouvant être portée à la ceinture ou dans le dos. L'invention peut aussi être mise en oeuvre pour les sécateurs à source d'alimentation intégrée. De manière plus générale, l'invention concerne des outils électroportatifs, et en particulier des outils ayant une coque en matière plastique ou composite.

### Etat de la technique antérieure

Les documents D1, D2, D3 et D4 dont les références sont précisées à la fin de la description, décrivent des sécateurs utilisables pour des travaux de récolte et de taille.

Le document D1 montre un sécateur présentant un carter, sous la forme d'un corps évidé, dont une partie forme une poignée, et à l'intérieur duquel sont logés notamment un moteur électrique et une transmission qui relie le moteur à une lame mobile. La transmission a pour fonction essentielle de communiquer le mouvement du moteur, rotatif, à une lame mobile qui est montée pivotante sur le carter. La lame mobile peut pivoter d'une position ouverte à une position refermée sur une lame fixe.

La transmission comporte différents organes tels qu'un réducteur, relié à l'arbre du moteur, un mécanisme de vis écrou à bille, monté à la sortie du réducteur pour convertir le mouvement de rotation du moteur en un mouvement de translation, puis des biellettes qui relient une noix du mécanisme de vis-écrou à billes à une came de la lame mobile.

Le moteur électrique est alimenté par une source d'alimentation distante comprenant une batterie d'accumulateurs électriques. Comme le montre le document D2, la source d'alimentation distante peut être portée notamment à la ceinture ou au dos. Elle est alors reliée au sécateur par un câble d'alimentation approprié.

L'utilisation d'une alimentation distante permet non seulement d'augmenter l'autonomie d'utilisation du sécateur mais permet également d'augmenter la puissance du moteur, en comparaison avec des outils à batterie intégrée.

Selon le type d'utilisation du sécateur, la puissance électrique consommée par le moteur est plus ou moins élevée. La puissance électrique absorbée est par exemple élevée dans le cas de la taille d'arbres fruitiers ou pour la taille de sarments de vigne de section importante. Elle peut atteindre des valeurs de crête de l'ordre du kilowatt.

### Exposé de l'invention

En dépit d'un rendement élevé des sécateurs, et de frottements particulièrement réduits, une partie de la puissance électrique consommée par l'outil est inévitablement transformée en chaleur. Les principales sources de chaleur dans le sécateur sont le moteur, les paliers de son rotor et le réducteur de la transmission. Or, ces éléments se trouvent généralement logés dans une partie de l'outil qui forme sa poignée.

Dans le cas d'une utilisation intensive et prolongée de l'outil, rendue possible par des sources d'alimentation de forte capacité, la chaleur dissipée finit par chauffer de manière inacceptable la poignée de l'outil. Ce phénomène est accentué par le choix des matériaux utilisés pour le carter. En effet, les matériaux du carter sont de préférence des matériaux légers et confortables pour la préhension de l'outil tels que des matières plastiques qui ne favorisent pas la dissipation de la chaleur. La main de l'utilisateur sur la poignée de l'outil, et donc sur le carter, constitue également une barrière à l'évacuation de la chaleur. Tous ces facteurs contribuent à augmenter la température de l'outil, et en particulier de sa poignée, et rendent son utilisation inconfortable.

Le problème de la génération de chaleur n'est pas propre aux sécateurs mais se pose de manière particulière pour ces outils. En effet, les possibilités de modification de la structure des sécateurs en vue d'un échauffement moindre sont limitées pour plusieurs raisons.

Une première raison est une construction particulièrement compacte. En effet, une partie du carter formant la poignée du sécateur est dimensionnée de manière à pouvoir être aisément tenue par la main. Ainsi l'espace disponible dans le carter est limité. Il en va de même pour les organes qui y sont logés, et notamment le moteur et sa transmission qui génèrent et transmettent la puissance nécessaire au fonctionnement de l'outil.

Une seconde raison est liée à des exigences de confort de la préhension de l'outil, et de légèreté. Ces exigences visent à limiter la fatigue de l'utilisateur susceptible d'utiliser l'outil pendant plusieurs heures. Elles dictent en revanche un choix de matériaux pour la réalisation du carter.

Enfin, une troisième raison est liée à la nécessité d'un assemblage robuste et fiable des éléments de l'outil, tout en autorisant un démontage partiel, pour des opérations de maintenance ou de nettoyage.

L'invention a pour but d'obvier aux difficultés mentionnées ci-dessus et de proposer un sécateur avec un confort thermique amélioré pour la main de l'utilisateur, en dépit d'un usage intensif.

Un but est en particulier de proposer un sécateur disposant d'une structure limitant fortement l'échauffement de la poignée.

Un but est aussi de proposer un tel sécateur autorisant un assemblage amélioré et une construction particulièrement solide et endurante.

Pour atteindre ces buts, l'invention propose un sécateur électroportatif tel que défini par la revendication 1. Les revendications subséquentes indiquent des modes de réalisation particuliers.

Le carter intermédiaire peut être réalisé d'une seule pièce, ou, de préférence en deux parties adjacentes démontables, par exemple deux demi-coques.

On entend par transmission l'ensemble des organes qui contribuent à transmettre le mouvement du moteur à l'organe de coupe. La transmission peut comporter, par exemple, un réducteur, un mécanisme de vis-écrou à billes, des biellettes, et une came. Elle peut être utilisée pour convertir le mouvement de rotation du moteur, en un mouvement de translation et le mouvement de translation en un mouvement de pivotement d'une lame de l'organe de coupe.

L'organe de coupe peut comporter en effet au moins une lame mobile. Il comprend, par exemple, une lame mobile pivotant par rapport à une lame fixe.

Le moteur peut comporter un stator, un rotor et des paliers de roulement supportant la rotation du moteur.

On considère que le carter intermédiaire est en contact avec le moteur lorsqu'il est en contact avec un boîtier du moteur ou directement avec le stator, et/ou les paliers du moteur.

Le carter intermédiaire peut aussi être en contact thermique avec des organes de la transmission. Il s'agit, par exemple, d'un réducteur, monté sur l'arbre du moteur, d'une couronne d'un réducteur ou d'un palier de la transmission.

Une fonction principale du carter intermédiaire est de conduire une grande partie de la chaleur produite par différents organes du moteur et/ou de la transmission vers le dissipateur thermique. Ceci évite un échauffement du carter principal et donc de la poignée.

Une autre fonction du carter intermédiaire, peut aussi être l'assemblage et le maintien de la cohésion de différentes parties du moteur, et/ou de la transmission.

Dans une réalisation très simple du carter intermédiaire, celui-ci peut se présenter comme un étui ou un fourreau, dans lequel sont insérés, le boîtier d'un moteur, un réducteur et/ou d'autres éléments de la transmission. L'insertion des différentes parties dans le fourreau est de préférence ajustée pour favoriser les échanges thermiques.

Dans une autre réalisation, particulièrement compacte, le carter intermédiaire peut servir de boîtier pour les organes du moteur, et/ou d'un réducteur couplé au moteur. Dans ce cas, le moteur n'a pas d'enveloppe propre. Le stator et les paliers du moteur sont directement logés dans le carter intermédiaire. De manière générale le carter intermédiaire peut être conçu pour recevoir et maintenir tous les organes ayant une pièce tournante en rotation selon le même axe que l'arbre du moteur.

Le carter intermédiaire comprend alors de préférence plusieurs parties, par exemple deux demi-coques, qui sont assemblées après l'intégration des organes du moteur et/ou d'organes de la transmission. Les demi-coques peuvent être assemblées par vissage. Elles peuvent aussi être assemblées à chacune de leur extrémité par un anneau élastique. L'anneau élastique d'au moins une des extrémités peut être, par exemple, un anneau élastique de type « Circlips ».

Le carter intermédiaire peut encore comporter une bride pour un assemblage d'un réducteur sur le moteur. Ceci est le cas, notamment, lorsque le réducteur comprend un boîtier qui lui est propre. La bride peut être constituée par une partie du carter intermédiaire qui se prolonge par rapport au moteur et qui entoure le réducteur.

Comme il ressort de ce qui précède, le carter intermédiaire peut constituer un moyen de fixation du réducteur sur le moteur ou peut constituer directement un boîtier de maintien commun pour des organes du moteur et du réducteur. Il est ainsi possible de tester ou de régler les paramètres de l'ensemble formé par le moteur et le réducteur avant son montage dans le carter principal. Ces mesures augmentent le rendement de fabrication du sécateur, et permettent d'éliminer les éléments défectueux avant l'assemblage final. Elles permettent aussi de minimiser l'encombrement de l'ensemble des pièces mécaniques ou tout au moins d'optimiser la taille de toutes les pièces fonctionnelles (moteur, réducteur, ...) pour optimiser les performances mécaniques de l'outil.

Le carter intermédiaire, bon conducteur de la chaleur, est de préférence en un métal léger tel que l'aluminium ou le magnésium. Il est logé dans le carter principal, et peut s'étendre notamment dans une partie du carter principal formant la poignée du sécateur.

Le carter principal peut être métallique ou, de préférence, en matière plastique. Il comprend, par exemple, une coque en deux parties vissées l'une sur l'autre et dimensionnées de manière à recevoir et maintenir les composants internes du sécateur et notamment le carter intermédiaire. Le carter principal présente également une partie formant poignée. Celle-ci peut être pourvue, le cas échéant, d'un organe de commande tel qu'une gâchette.

Le dissipateur thermique est relié au carter intermédiaire. Il peut être rapporté sur le carter intermédiaire ou être fabriqué d'une seule pièce avec le carter intermédiaire. Lorsque le carter intermédiaire est lui-même formé de deux demi-coques assemblées, une partie du dissipateur peut être formée sur chacune de ces demi-coques. Par exemple, chaque demi-coque peut être pourvue d'une ailette du dissipateur. Le dissipateur fait saillie à l'extérieur du carter principal lorsque le carter intermédiaire est monté dans le carter principal.

La chaleur recueillie par le carter intermédiaire est transmise par conduction vers le dissipateur. Elle est ensuite dissipée à l'extérieur du sécateur par rayonnement ou par convection au contact de l'air ambiant. La chaleur peut aussi être dissipée par conduction dans d'autres organes extérieurs du sécateur, tels qu'une garde. Plusieurs dissipateurs, ou un dissipateur en plusieurs parties peuvent être prévus. Le carter principal présente ainsi un ou plusieurs passages pour le dissipateur. Il peut notamment présenter des ajourages, par exemple des fentes, à travers lesquelles s'étendent deux ailettes du dissipateur.

Le dissipateur est de préférence ménagé en une partie du sécateur qui n'est pas utilisée comme poignée. Il est ménagé, par exemple, en une extrémité de la poignée. Il peut alors constituer une garde ou une partie de garde, c'est-à-dire une protection mécanique pour la main de l'utilisateur.

Le sécateur peut être pourvu d'une garde s'étendant le long de la poignée et formant un pontet autour de la gâchette. Dans ce cas, le dissipateur peut être utilisé comme un moyen de fixation de la garde.

D'autres caractéristiques et avantages de l'invention ressortent de la description des figures qui suit. Cette description est donnée à titre d'illustration et non de limitation.

### Brève description des figures

La figure 1 est un éclaté partiel d'un sécateur conforme à l'invention.
La figure 2 est un éclaté d'un carter intermédiaire du sécateur de la figure 1 et d'un ensemble moteur-réducteur qui y est logé.

### Description détaillée de modes de mise en oeuvre de l'invention.

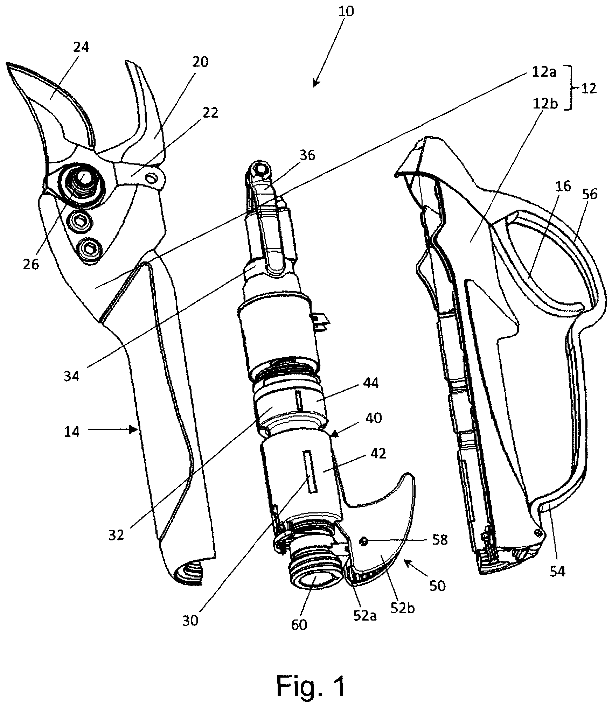

La figure 1 montre un sécateur 10 avec un carter principal 12 formant une poignée 14. Le carter principal 12, de préférence en matière plastique, ou en un matériau composite, comprend une coque supérieure 12a et une coque inférieure 12b assemblée par vissage sur la coque supérieure 12a. Outre la fonction de poignée, le carter principal sert aussi à la fixation de l'organe de coupe. Par exemple, une patte de fixation d'une lame fixe 20 est vissée sur la coque supérieure. Le carter a encore pour fonction de recevoir et de maintenir les organes du sécateur. Il reprend ainsi les efforts de l'organe de coupe et les efforts générés par les organes internes.

A l'intérieur du carter principal 12 sont notamment logés un moteur 30, un réducteur à planétaire 32 et un mécanisme de vis-écrou à billes 34. Le mécanisme de vis-écrou à billes 34 transforme le mouvement de rotation du moteur en un mouvement de translation. Il est relié par des biellettes 36 à une came 22 d'une lame mobile 24. La came est mue par les biellettes et fait pivoter la lame mobile 24 autour d'un pivot 26 qui la relie à la lame fixe 20. La lame mobile 24 peut en particulier pivoter d'une position de repos, ouverte, vers une position refermée sur la lame fixe, et inversement. Le mouvement de la lame est commandé par une gâchette 16 ménagée à l'avant de la poignée 14.

La gâchette 16 est associée à un capteur de position et à une carte électronique configurée pour générer des commandes pour le moteur.

Sur la figure 1, le moteur et le réducteur sont montés dans un carter intermédiaire 40. Le carter intermédiaire comprend une première partie 42 ajustée au moteur, et en contact thermique avec le moteur. La première partie 42 peut être formée, par exemple, à la manière d'un fourreau dans lequel le moteur est reçu à ajustement serré. Une deuxième partie 44 du carter intermédiaire sert de bride de fixation du réducteur 32 sur le moteur. La deuxième partie 44 du carter intermédiaire peut également être formée à la manière d'un fourreau - pour la réception du réducteur.

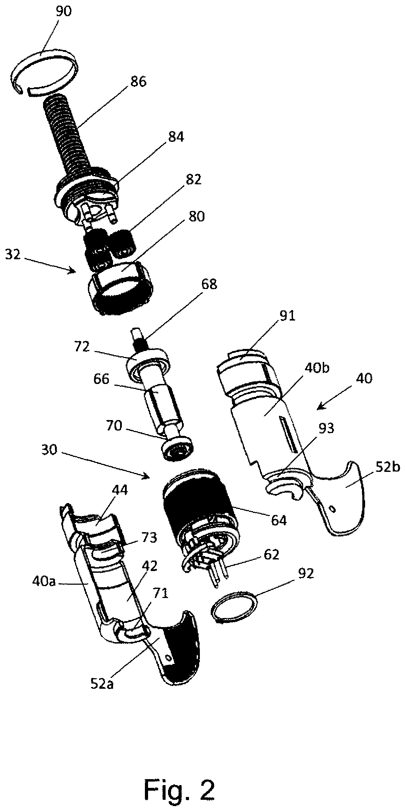

Dans une version plus simple, le réducteur peut ne pas être reçu dans le carter intermédiaire. Toutefois, il est avantageux que l'ensemble formé par le moteur et le réducteur soit monté dans le carter intermédiaire. Celui-ci sert alors, non seulement de dissipateur thermique, mais aussi de fixation pour maintenir le réducteur sur le moteur. Le moteur 30 peut comporter un boîtier qui lui est propre et qui est inséré dans la première partie 42 du carter intermédiaire. Le carter intermédiaire peut encore servir de boîtier ou de support pour les organes constituant le moteur et/ou le réducteur. Cette autre possibilité est décrite en référence à la figure 2.

Comme évoqué précédemment, il est possible, grâce au carter intermédiaire, de tester l'ensemble moteur-réducteur avant son assemblage avec les autres organes du sécateur et avant son montage dans le carter principal.

Par retour à la figure 1, on peut observer que le carter intermédiaire 40 est pourvu d'un dissipateur thermique 50. Le dissipateur thermique 50 comprend deux ailettes de refroidissement 52a, 52b, qui font saillie à l'extérieur du carter principal 12 à travers des ajourages adaptés. Les ailettes du dissipateur sont ménagées en une extrémité du carter principal, ou du corps d'outil, opposée à l'extrémité qui porte les lames 20, 24 de l'organe de coupe. La fonction principale des ailettes est une fonction de refroidissement. Les ailettes favorisent en effet la dissipation de l'énergie thermique produite par le moteur et/ou le réducteur, et transmise à au carter intermédiaire. La dissipation de l'énergie thermique dans les ailettes de refroidissement 52a, 52b réduit la température à l'intérieur du carter principal 12 et limite l'échauffement de la poignée 14.

Les ailettes de refroidissement 52a, 52b, situées à l'arrière de la poignée, présentent une forme incurvée en direction de la poignée avec un rayon de courbure adapté à la main d'un utilisateur. Ainsi le dissipateur 50 constitue également une première garde de protection de la poignée et plus précisément de la main d'un utilisateur tenant la poignée. Une deuxième garde 54, prolonge la première garde formée par le dissipateur thermique 50 jusqu'à la partie avant du sécateur recevant l'organe de coupe. La deuxième garde 54 peut être en métal ou en matière plastique. Elle longe la poignée 14 et forme un pontet 56 de la gâchette 16.

La deuxième garde 54 est fixée au carter principal 12 à l'avant de la gâchette 16. Elle est également fixée au dissipateur 50 au moyen d'un goujon 58. L'utilisation du dissipateur comme élément de fixation pour la garde procure un ancrage solide de cette dernière et participe à la solidité générale du sécateur.

Un connecteur 60 se situe à l'arrière du sécateur à proximité du moteur 30. Il permet de relier le sécateur 10 à une source d'alimentation en énergie électrique distante, au moyen d'un câble d'alimentation. La source d'alimentation en énergie électrique, par exemple une batterie d'accumulateurs, de même que le câble, ne sont pas représentés sur la figure 1.

La figure 2 montre une réalisation particulière du carter intermédiaire et d'un ensemble moteur-réducteur logé dans le carter intermédiaire 40.

Le carter 40 de la figure 2 se présente sous la forme de deux demi-coques 40a, 40b qui servent directement de boîtier pour les organes du moteur 30 et du réducteur 32. En particulier une première partie 42 du carter intermédiaire est conçue pour loger un stator 64 du moteur. On peut observer à l'arrière du stator 64 des broches 62 qui sont les broches du connecteur 60 évoqué en référence à la figure 1.

Un rotor 66 du moteur, concentrique au stator 64, est monté sur des roulements 70, 72 qui sont reçus respectivement dans des logements correspondants 71, 73 du carter intermédiaire 40.

De la même manière, la deuxième partie 44 du carter intermédiaire 40 ne sert plus simplement de bride de fixation d'un réducteur, comme dans la figure 1, mais sert de boîtier pour les organes du réducteur. En particulier, une couronne 80 du réducteur est directement logée et fixée dans la deuxième partie 44 du carter intermédiaire. En d'autres termes, le réducteur n'a pas de boîtier propre mais ses organes sont directement reçus dans le carter intermédiaire.

Dans l'exemple de la figure 2, le réducteur comprend trois satellites 82, roulant dans la couronne 80. Les satellites 82, reçus sur un porte satellite 84, sont entraînés en rotation par un pignon 68 solidaire de l'arbre du rotor 66. Le porte satellite 84 est monté sur une vis 86, coaxiale à l'arbre du moteur, qui fait partie du mécanisme de vis-écrou à billes évoqué en référence à la figure 1.

Les deux demi-coques 40a, 40b du carter intermédiaires sont assemblées au moyen d'un premier anneau élastique 90, reçu sur un épaulement 91 des demi-coques, et au moyen d'un deuxième anneau élastique 92 reçu dans une gorge 93 des demi-coques. Le deuxième anneau est de type « Circlips ».

On peut encore observer que chaque demi-coque 40a, 40b est formée d'une seule pièce respectivement avec l'une des ailettes 52a, 52b du dissipateur thermique.

### Documents cités

D1 : FR 2614568
D2 : G8614677
D3 : EP 2156732
D4 : CN 203537937 U.

## Revendications

1. Sécateur électroportatif comprenant un moteur électrique (30), un organe de coupe (20, 24), et une transmission (32, 34, 36) reliant le moteur électrique à l'organe de coupe, le moteur et la transmission étant logés dans un carter principal (12) formant une poignée (14),
le sécateur électroportatif comprenant également :
• un carter intermédiaire (40, 42, 44) en un matériau conducteur thermique, logé dans le carter principal (12) et s'étendant à l'intérieur de la poignée (14),
• au moins un dissipateur thermique (50), relié au carter intermédiaire (40, 42, 44), et faisant saillie à l'extérieur du carter principal (12),
le sécateur électroportatif étant **caractérisé en ce que** :
• le carter principal (12), outre la fonction de poignée (14), sert aussi à la fixation de l'organe de coupe (20, 24),
• le carter intermédiaire (40, 42, 44) est en contact thermique avec le moteur électrique (30).

2. Outil électroportatif selon la revendication 1, dans lequel le carter intermédiaire (40, 42, 44) comprend deux parties (40a, 40b) adjacentes et démontables.

3. Outil électroportatif selon la revendication 1, dans lequel le carter intermédiaire (40, 42, 44) est réalisé d'une seule pièce.

4. Outil électroportatif selon l'une des revendications précédentes, dans lequel le carter intermédiaire (40) est en outre en contact thermique avec au moins un organe de la transmission.

5. Outil électroportatif selon l'une des revendications précédentes, dans lequel la transmission comprend un réducteur (32) et dans lequel le carter intermédiaire (40) est en contact thermique avec le réducteur (32).

6. Outil électroportatif selon la revendication 5, dans lequel le réducteur (32) comprend une couronne (80) directement fixée dans le carter intermédiaire (40).

7. Outil électroportatif selon l'une des revendications précédentes, dans lequel le carter intermédiaire (40) comprend une bride (44) pour un assemblage du réducteur sur le moteur.

8. Outil électroportatif selon l'une des revendications précédentes, dans lequel le moteur comprend un stator (64) et des paliers de roulement (70, 72), le stator et les paliers de roulement étant directement fixés dans le carter intermédiaire (40).

9. Outil électroportatif selon l'une des revendications précédentes, dans lequel le moteur présente un boîtier inséré dans le carter intermédiaire.

10. Outil électroportatif selon l'une des revendications précédentes dans lequel le dissipateur (50) est formé d'une seule pièce avec le carter intermédiaire (40).

11. Outil électroportatif selon l'une des revendications précédentes, dans lequel l'organe de coupe (20, 24) est solidaire d'une première extrémité du carter principal (12) et dans lequel le dissipateur (50) fait saillie à l'extérieur du carter principal en une deuxième extrémité du carter principal sensiblement opposée à la première extrémité.

12. Outil électroportatif selon l'une des revendications précédentes dans lequel le dissipateur thermique (50) présente deux ailettes (52a, 52b).

13. Outil électroportatif selon la revendication 10, dans lequel la poignée (14) est pourvue d'une garde (54), la garde étant reliée au dissipateur thermique (50).

14. Outil électroportatif selon la revendication 10, dans lequel le dissipateur thermique (50) est ménagé à proximité de la poignée (14) du sécateur pour former une garde de protection de la poignée.

## Patentansprüche

1. Handgeführte Baumschere mit Motorantrieb, umfassend einen Elektromotor (30), ein Schneidelement (20, 24) und ein Getriebe (32, 34, 36), das den Elektromotor mit dem Schneidelement verbindet, wobei der Motor und das Getriebe in einem Hauptgehäuse (12) angeordnet sind, das einen Griff (14) bildet,
wobei die handgeführte Baumschere mit Motorantrieb ferner Folgendes umfasst:
• ein Zwischengehäuse (40, 42, 44) aus einem wärmeleitfähigen Material, das in dem Hauptgehäuse (12) angeordnet ist und sich in dem Griff (14) erstreckt,
• mindestens einen Kühlkörper (50), der mit dem Zwischengehäuse (40, 42, 44) verbunden ist und aus dem Hauptgehäuse (12) heraus vorsteht,
wobei die handgeführte Baumschere mit Motorantrieb **dadurch gekennzeichnet ist, dass**
• das Hauptgehäuse (12) außer der Funktion des Griffs (14) auch der Befestigung des Schneidelements (20, 24) dient,
• das Zwischengehäuse (40, 42, 44) in Wärmekontakt mit dem Elektromotor (30) steht.

2. Handwerkzeugmaschine nach Anspruch 1, wobei das Zwischengehäuse (40, 42, 44) zwei aneinandergrenzende und demontierbare Teile (40a, 40b) umfasst.

3. Handwerkzeugmaschine nach Anspruch 1, wobei das Zwischengehäuse (40, 42, 44) einstückig ausgebildet ist.

4. Handwerkzeugmaschine nach einem der vorhergehenden Ansprüche, wobei das Zwischengehäuse (40) ferner in Wärmekontakt mit mindestens einem Element des Getriebes steht.

5. Handwerkzeugmaschine nach einem der vorhergehenden Ansprüche, wobei das Getriebe ein Untersetzungsgetriebe (32) umfasst und wobei das Zwischengehäuse (40) in Wärmekontakt mit dem Untersetzungsgetriebe (32) steht.

6. Handwerkzeugmaschine nach Anspruch 5, wobei das Untersetzungsgetriebe (32) einen Kranz (80) umfasst, der direkt in dem Zwischengehäuse (40) befestigt ist.

7. Handwerkzeugmaschine nach einem der vorhergehenden Ansprüche, wobei das Zwischengehäuse (40) einen Flansch (44) zur Montage des Untersetzungsgetriebes an dem Motor umfasst.

8. Handwerkzeugmaschine nach einem der vorhergehenden Ansprüche, wobei der Motor einen Stator (64) und Wälzlager (70, 72) umfasst, wobei der Stator und die Wälzlager direkt in dem Zwischengehäuse (40) befestigt sind.

9. Handwerkzeugmaschine nach einem der vorhergehenden Ansprüche, wobei der Motor ein Motorgehäuse aufweist, das in das Zwischengehäuse eingesetzt ist.

10. Handwerkzeugmaschine nach einem der vorhergehenden Ansprüche, wobei der Kühlkörper (50) einstückig mit dem Zwischengehäuse (40) ausgebildet ist.

11. Handwerkzeugmaschine nach einem der vorhergehenden Ansprüche, wobei das Schneidelement (20, 24) fest mit einem ersten Ende des Hauptgehäuses (12) verbunden ist und wobei der Kühlkörper (50) aus dem Hauptgehäuse heraus an einem zweiten Ende des Hauptgehäuses, das dem ersten Ende im Wesentlichen gegenüberliegt, vorsteht.

12. Handwerkzeugmaschine nach einem der vorhergehenden Ansprüche, wobei der Kühlkörper (50) zwei Rippen (52a, 52b) aufweist.

13. Handwerkzeugmaschine nach Anspruch 10, wobei der Griff (14) mit einem Bügel (54) versehen ist, wobei der Bügel mit dem Kühlkörper (50) verbunden ist.

14. Handwerkzeugmaschine nach Anspruch 10, wobei der Kühlkörper (50) in der Nähe des Griffs (14) der Baumschere angeordnet ist, um einen Schutzbügel des Griffs zu bilden.

## Claims

1. Portable electric pruning shears comprising an electric motor (30), a cutting member (20, 24) and a transmission (32, 34, 36) connecting the electric motor to the cutting member, the motor and the transmission being accommodated in a main housing (12) forming a handle (14),
the portable electric pruning shears also comprising:
• an intermediate housing (40, 42, 44) made of a heatconducting material accommodated in the main housing (12) and extending to the inside of the handle (14),
• at least one heat sink (50) connected to the intermediate housing (40, 42, 44) and projecting to the outside of the main housing (12),
the portable electric pruning shears being **characterized in that**:
• the main housing (12), in addition to the function of a handle (14), also serves for the fixation of the cutting member (20, 24),
• the intermediate housing (40, 42, 44) is in thermal contact with the electric motor (30).

2. Portable electric tool according to Claim 1, in which the intermediate housing (40, 42, 44) comprises two adjacent and removable parts (40a, 40b).

3. Portable electric tool according to Claim 1, in which the intermediate housing (40, 42, 44) is made in one piece.

4. Portable electric tool according to one of the preceding claims, in which the intermediate housing (40) is also in thermal contact with at least one member of the transmission.

5. Portable electric tool according to one of the preceding claims, in which the transmission comprises a reducing unit (32) and in which the intermediate housing (40) is in thermal contact with the reducing unit (32).

6. Portable electric tool according to Claim 5, in which the reducing unit (32) comprises a ring (80) fixed directly in the intermediate housing (40).

7. Portable electric tool according to one of the preceding claims, in which the intermediate housing (40) comprises a flange (44) for mounting the reducing unit on the motor.

8. Portable electric tool according to one of the preceding claims, in which the motor comprises a stator (64) and rolling bearings (70, 72), the stator and the rolling bearings being fixed directly in the intermediate housing (40).

9. Portable electric tool according to one of the preceding claims, in which the motor has a casing inserted in the intermediate housing.

10. Portable electric tool according to one of the preceding claims, in which the heat sink (50) is formed in one piece with the intermediate housing (40).

11. Portable electric tool according to one of the preceding claims, in which the cutting member (20, 24) is secured to a first end of the main housing (12) and in which the heat sink (50) projects to the outside of the main housing at a second end of the main housing that is substantially opposite to the first end.

12. Portable electric tool according to one of the preceding claims, in which the heat sink (50) has two fins (52a, 52b).

13. Portable electric tool according to Claim 10, in which the handle (14) is provided with a guard (54), the guard being connected to the heat sink (50).

14. Portable electric tool according to Claim 10, in which the heat sink (50) is disposed in the proximity of the handle (14) of the pruning shears to form a protective guard of the handle.
